# EUROPÄISCHE PATENTSCHRIFT

(11) **EP 0 554 900 B1**
(45) Veröffentlichungstag und Bekanntmachung des Hinweises auf die Patenterteilung: **05.08.1998**
(21) Anmeldenummer: 93101847.7
(22) Anmeldetag: 05.02.1993
(51) Int. Cl.: G01D 5/20

(54) **Elektromotor mit induktiv arbeitendem Stellungsdetektor**
Electric motor with inductive position detector
Moteur électrique avec un capteur inductif de position

(30) Priorität: 06.02.1992 DE 4203433
(43) Veröffentlichungstag der Anmeldung: 11.08.1993
(73) Patentinhaber: Magnet-Motor Gesellschaft für magnetmotorische Technik mbH, D-82319 Starnberg (DE)
(72) Erfinder: Ehrhart, Peter, Dr., W-8000 München 70 (DE); Weck, Werner, Dr., W-8130 Starnberg (DE); Gründl, Andreas, Dr., W-8000 München 70 (DE); Hoffmann, Bernhard, W-8130 Starnberg (DE)
(74) Vertreter: Klunker . Schmitt-Nilson . Hirsch

(56) Entgegenhaltungen:
- EP-A- 443 148
- CH-A- 548 016
- PATENT ABSTRACTS OF JAPAN, vol. 13, no. 226 (E-763) 25 May 1989; & JP-A-1 034 158 ( TAMAGAWA SEIKI CO LTD ) 03 February 1989
- PATENT ABSTRACTS OF JAPAN, vol. 12, no. 140 (P-696) 28 April 1988; & JP-A-62 261 922 ( SANYO DENKI CO LTD ) 14 November 1987
- PATENT ABSTRACTS OF JAPAN, vol. 4, no. 79 (E-014) 7 June 1980; & JP-A-55 046 862 ( OKUMA MACH WORKS LTD ) 2 April 1980

## Beschreibung

Die Erfindung betrifft einen Elektromotor mit induktiv arbeitendem Stellungsdetektor zum Ermitteln der relativen Lage des Rotors des Elektromotors bezüglich des Stators gemäß Oberbegriff des Anspruchs 1.

Um bei einem Elektromotor, z.B. einem Elektromotor mit Permanentmagnet-Rotor, die Signale zur Kommutierung des Statorspulenstroms verfügbar zu machen, sieht man derartige Stellungsdetektoren vor, die üblicherweise aus Hallelementen bestehen, die an dem Elektromotor angebracht werden. Solche Stellungsdetektoren mit Hallelementen arbeiten zuverlässig, haben jedoch ein ziemlich beschränktes Auflösungsvermögen. Die Kommutierung kann natur-gemäß nur so genau und gut erfolgen, wie die Signale die jeweilige Rotorstellung kennzeichnen.

In baulicher Hinsicht sind die bekannten Anordnungen für Stellungsgebersysteme insofern manchmal störend, als es sich um separate am Elektromotor anzubringende Bauteile handelt.

Aus der JP-A-1 034 158 und in der JP-A-62 261 922 ist ein Elektromotor der im Oberbegriff des Anspruchs 1 genannten Art bekannt. Über die spezielle Art der Ausbertung der Ausbildung der Spulenwindungen und gibt es keine nähren Angaben. Aus der JP-A-55 046 862 und der CH-A-548 016 ist es bekannt, mit einem Resolver Sinus und Kosinussignale zu bilden und auszuwerten.

Der Erfindung liegt die Aufgabe zugrunde, einen Elektromotor mit induktiv arbeitendem Stellungsdetektor der eingangs genannten Art anzugeben, bei dem die Einzelteile des Stellungsdetektors in den Gesamtaufbau des Elektromotors baulich integriert sind, wobei der Detektor gleichzeitig ein hohes Auflösungsvermögen hinsichtlich der Rotorstellung aufweisen soll.

Gelöst wird diese Aufgabe durch die im Kennzeichnungsteil des Anspruchs 1 angegebenen Merkmale.

Die Energieübertragung vom Stator auf den Rotor erfolgt induktiv, z.B. durch einen hochfrequenten Wechselstrom mit einer Frequenz von 20 kHz. Die Energie-Empfangseinrichtung und die Sendeeinrichtung sind am Rotor befestigt und drehen sich mit diesem. Es erfolgt eine Signalübertragung zu der Signal-Empfangseinrichtung am Stator, und die empfangenen, stellungsabhängigen Signale werden ausgewertet.

Mit dem erfindungsgemäßen Elektromotor mit Stellungsdetektor kann eine sehr hohe Auflösung erreicht werden. Die phasenverschobenen Signale sind z.B. ein Sinus- und ein Kosinus-Signal, also um 90° phasenverschobene Signale. Diese gewinnt man speziell dadurch, daß die rotorseitige Sende- und die statorseitige Signal-Empfangseinrichtung zur Erzeugung der stellungsabhängigen Signale aus Spulenwindungen bestehen, die sich in Ebenen senkrecht zur Drehachse des Rotors erstrecken. Durch die Spulenwindungen erfolgt die Energie- und Signal-Übertragung vom Rotor zum Stator, d.h. zu den dortigen Spulenwindungen.

Zur Energieübertragung vom Stator auf den Rotor kann man konzentrisch zur Rotorachse liegende Spulenschleifen verwenden, in die man einen hochfrequenten Wechselstrom einkoppelt. Diese Spulenschleifen können rotorseitig und statorseitig ähnlich ausgebildet sein.

Die stellungsabhängigen, phasenverschobenen Signale werden dadurch gewonnen, daß die rotorseitigen Sende- und die statorseitigen Empfangsspulenwindungen in Umfangsrichtung sinusförmigen Verlauf aufweisen. Alternativ können die rotorseitigen Spulenwindungen in Umfangsrichtung etwa rechteckförmigen Verlauf aufweisen.

Mit diesem sinus- bzw. rechteckförmigen Verlauf der Spulenwindungen gewinnt man die stellungsabhängigen Signale, da je nach Stellung des Rotors relativ zu dem Stator eine mehr oder weniger starke induktive Kopplung vorhanden ist.

Die bei dem erfindungsgemäßen Elektromotor erhaltenen Signale werden speziell zur Kommutierung verwendet. Hierzu liefert die Auswerteeinheit Stellungssignale an eine Stromrichterelektronik, in der sie z.B. von einer Steuerungs-Software verarbeitet werden.

Zusätzlich, oder alternativ zur Verwendung bei der Kommutierung können die Stellungssignale auch für die Positionierung der Rotorstellung oder zur Drehzahlmessung verwendet werden.

Besonders dann, wenn die Signale zur Kommutierung herangezogen werden, sieht die Erfindung vor, daß die Anzahl der Wellenlängen der rotorseitigen Sende- und der statorseitigen Empfangsspulenwindungen am Umfang jeweils gleich der Polpaarzahl der Erregereinrichtung des Rotors des Elektromotors ist. Alternativ kann die Anzahl der Wellenlängen der rotorseitigen Sende- und statorseitigen Empfangsspulenwindngen am Umfang jeweils einem ganzzahligen Bruchteil der Polpaarzahl der Erregereinrichtung des Rotors entsprechen. Entspricht die Teilung des Stellungsdetektors derjenigen der Erregereinrichtung des Rotors, so werden, abhängig von der Drehzahl, relativ hochfrequente phasenverschobene Signale an die Auswerteeinheit geliefert. Da die Verarbeitungsgeschwindigkeit dieser Auswerteeinheit jedoch begrenzt ist, kann es ausreichend sein, gemäß der genannten Alternative nur einen ganzzahligen Bruchteil der Polpaarzahl zugrunde zu legen. Verteilen sich z.B. über den Umfang des Rotors 21 Polpaare, so ist der erste "ganzzahlige Bruchteil" 7, d.h. in diesem Fall können sich z.B. sieben Wellenlängen der rotorseitigen und der statorseitigen Spulenwindungen über den Umfang erstrecken.

Eine besonders kompakte Bauweise des Elektromotors bei guter induktiver Kopplung zwischen den Spulenwindungen auf der Rotorseite einerseits und der Statorseite andererseits wird erreicht, indem sämtliche stator- und sämtliche rotorseitigen Sende- und Empfangseinrichtungen jeweils auf einer gemeinsamen Scheibe untergebracht sind. Auf den Scheiben sind die Spulenwindungen als Leiterbahnen ausgebildet. Die Herstellung solcher Spulen ist an sich bekannt.

Um speziell die phasenverschobenen Signale zu erhalten, insbesondere um 90° phasenverschobene Sinus-Signale, also ein Sinus-Signal und ein Kosinus-Signal, sieht die Erfindung vor, daß die beiden phasenverschobenen Signale der statorseitigen Signal-Empfangseinrichtung durch zwei gegeneinander phasenverschobene Spulenleiterbahnen auf der Vorder- und Rückseite der Leiterplatte erzeugt werden. Die Leiterplatte für die Leiterbahnen der rotorseitigen Spulenwindungen hat naturgemäß einen gewissen Abstand von der Platte, die die Leiterbahnen der statorseitigen Spulenwindungen trägt. Wenn man die Leiterbahnen auf der rotorseitigen Leiterplatte "außen" vorsieht, so daß sie den Leiterbahnen auf der statorseitigen Leiterplatte direkt gegenüberliegen, so haben die anderen Leiterbahnen auf der dem Rotor abgewandten Rückseite der statorseitigen Leiterplatte einen größeren Abstand von den rotorseitigen Spulenwindungen als die auf der Vorderseite der statorseitigen Leiterplatte befindlichen Leiterbahnen.

Dies wirkt sich so aus, daß die in den beiden Leiterbahnen der statorseitigen Signal-Empfangseinrichtung induzierten stellungsabhängigen Signale unterschiedlich große Amplituden besitzen. Hier kann man durch geeignete Verstärkung/Dämpfung in der Auswerteeinheit eine Anpassung vornehmen.

Eine vergleichsweise bessere Lösung gemäß der Erfindung sieht jedoch vor, daß die beiden phasenverschobenen Signale der statorseitigen Signal-Empfangseinrichtung durch zwei gegeneinander phasenverschobene Spulenleiterbahnen, deren jeweils erste Wellenlängenhälften auf der Vorder- bzw. Rückseite, und deren jeweils zweite Wellenlängenhälften auf der Rück- bzw. Vorderseite der Leiterplatte liegen, erzeugt werden. Damit liegen die Leiterbahnen "virtuell" beide in der Mittelebene der statorseitigen Leiterplatte. Man erhält also aus beiden Spulen Signale gleicher Amplitude.

Um zu vermeiden, daß die signalabhängigen Stellungssignale durch Störsignale beeinträchtigt werden, müssen Sendeleistung und Empfangsvermögen in geeigneter Weise bemessen sein. Die Amplituden der Nutzsignale müssen ausreichend größer sein als etwaige Störsignale. Andererseits müssen die Stellungssignale klein genug sein, um die Elektronik in der Auswerteeinheit nicht zu stark zu belasten. Demgemäß sieht die Erfindung vor, daß die Abstände zwischen feststehendem und rotierendem Teil nicht über 30 mm liegen.

Statorseitig ist erfindungsgemäß noch mindestens eine Empfangsspulenwindung vorgesehen. Sie empfängt als Referenzgröße die Trägerfrequenzsignale entweder der statorseitigen Sendeeinrichtung und/oder der rotorseitigen Sendeeinrichtung, in jedem Fall jedoch in der korrekten Phasenlage. Das statorseitig empfangene stellungsabhängige Sinus-bzw. Kosinus-Signal (amplitudenmodulierte Trägerfrequenz) kann in Kombination mit dem Referenzsignal ausgewertet werden, um beispielsweise weitgehend störungsunabhängig zu sein.

Zwischen zwei Polwechseln kann durch die Überlagerung der beiden statorseitig empfangenen Signale prinzipiell jede Stellung detektiert werden, die praktische Auflösung ist nur durch das Auflösungsvermögen der Auswerteelektronik begrenzt. Deren Signale können direkt von der Steuerungssoftware der stromrichterelektronik weiterverarbeitet werden. Man kann auch Defekte des Stellungsdetektors erkennen.

Im folgenden werden Ausführungsbeispiele der Erfindung anhand der Zeichnungen näher erläutert. Es zeigen:
- **Fig. 1**: ein Funktions-Blockschaltbild eines Stellungsdetektors für einen Elektromotor;
- **Fig. 2**: eine Teil-Schnittansicht eines Elektromotors mit Permanentmagnet-Rotor;
- **Fig. 3**: eine Draufsicht auf eine am Rotor angebrachte Spulenanordnung;
- **Fig. 4**: eine Draufsicht auf die Vorderseite einer mit einer Spulenanordnung bestückten, statorseitigen Leiterplatte; und
- **Fig. 5**: eine Draufsicht auf die Rückseite der statorseitigen Leiterplatte.

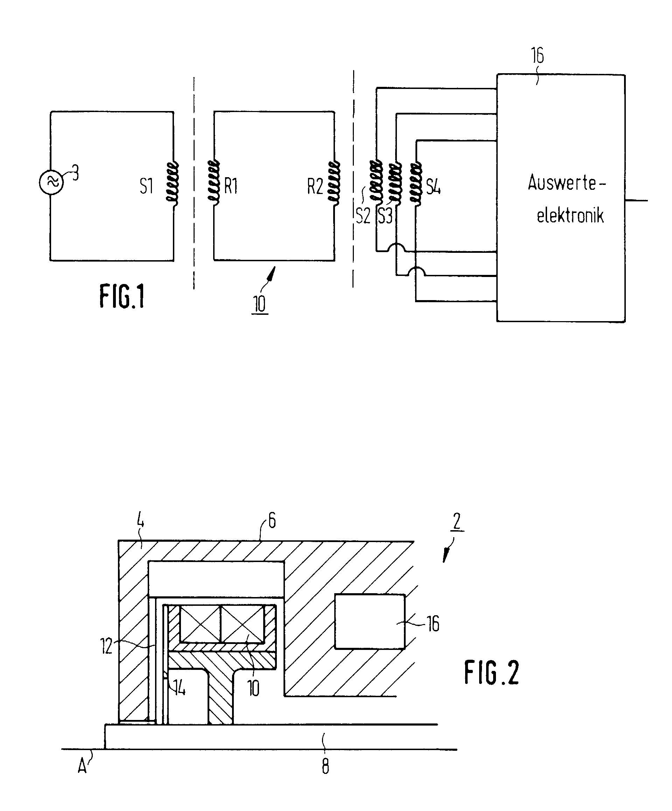

**Fig. 1** zeigt ein funktionelles Blockschaltbild eines induktiv arbeitenden Stellungsdetektors.

Eine HF-Wechselspannungsquelle 3, die eine HF-Wechselspannung von 20 kHz liefert, ist auf der Statorseite an eine statorseitige, feststehende Spule S1 angeschlossen. Diese Spule S1 induziert in einer rotorseitigen Spule R1 einen Strom, der auch durch eine weitere Spule R2 fließt. Die beiden Spulen R1 und R2 sind an dem Rotor 10 befestigt und drehen sich mit dem Rotor.

Die Spule R2 induziert in statorseitig vorhandenen Spulen S2 und S3 Spannungen, die in der Phase gegeneinander um 90° versetzt sind. In der Spule S4 wird eine von der Stellung des Rotors unabhängige Referenzspannung induziert, die die Trägerfrequenz phasenrichtig detektiert und deren Amplitude angibt. Die von den Spulen S2, S3 und S4 kommenden Signale werden von einer Auswerte-Elektronik 16 verarbeitet.

**Fig. 2** zeigt die bauliche Ausgestaltung des Stellungsdetektors. Ein Elektromotor 2 besitzt in einem Kunststoffgehäuse 4 einen Stator 6 mit hier nicht näher dargestellten Feldspulen. Auf einer Drehwelle 8 ist ein Rotor 10 mit Permanentmagneten befestigt. Bei diesem Beispiel sind über den Umfang des Rotors 10 z.B. 42 Magneten angeordnet, so daß 21 Polpaare vorhanden sind.

An der links in **Fig. 2** dargestellten Stirnfläche des Rotors 10 befindet sich eine Leiterplatte 14, auf der in der nachfolgend beschriebenen Weise in Form von Leiterbahnen Spulenwindungen ausgebildet sind. Der Leiterplatte 14 liegt eine am Stator 6 bzw. am Gehäuse 4 befestigte Leiterplatte 12 mit gewissem Abstand gegenüber. Auf beiden Seiten der Leiterplatte 12 sind Spulenwindungen ausgebildet.

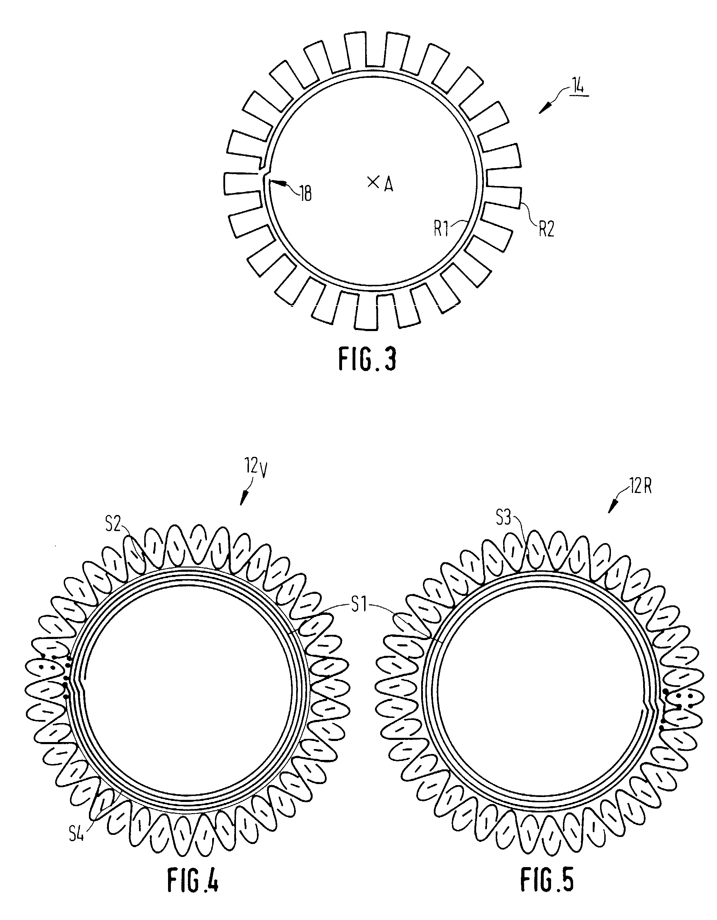

**Fig. 3** zeigt die Leiterbahnen auf der der Leiterplatte 12 zugewandten Seite der Leiterplatte 14. Man erkennt die als zwei Spulenwindungen aufweisende Spule R1, die konzentrisch zu der Drehachse A der Rotorwelle 8 angeordnet ist. An einer Übergangsstelle 18 geht die kreisförmige Spule R1 über in die Spule R2, die bei dieser Ausführungsform aus einer sich über den gesamten Umfang erstreckenden, rechteckig verlaufenden Leiterbahn besteht.

**Fig. 4 und 5** zeigen die Leiterbahnen auf der Leiterplatte 12, und zwar zeigt **Fig. 4** die Vorderseite 12_{V}, die der Leiterplatte 14 mit den Spulen R1 und R2 zugewandt ist. **Fig. 5** zeigt die Rückseite 12_{R} der Leiterplatte 12.

In der gleichen radialen Höhe wie die Spule R1 an der Leiterplatte 14 sind auf beiden Seiten der Leiterplatte 12 ringförmige Spulenwindungs-Leiterbahnen ausgebildet, die zusammen die Spule S1 bilden.

Radial außerhalb der Spule S1 befinden sich sinusförmig verlaufende Leiterbahnen, die die Spulen S2 und S3 bilden. Wie aus der Zeichnung hervorgeht, befindet sich jeweils eine halbe Wellenlänge sowohl der Spule S2 als auch der Spule S3 auf der Vorderseite 12_{V}, während die andere Hälfte sich auf der Rückseite 12_{R} befindet. Damit haben beide Spulen S2 und S3 im Mittel den gleichen Abstand von der mit dem Rotor drehenden Spule R2.

Wie anhand der **Fig. 1** erläutert, erfolgt die Energieübertragung durch induktive Kopplung zwischen den Spulen S1 auf der Seite des Stators einerseits und der Spule R1 auf der Seite des Rotors andererseits. Der durch die Spule R1 fließende Strom fließt auch durch die Spule R2. Abhängig von der relativen Lage zwischen den einzelnen rechteckigen Abständen der Spule R2 einerseits und den sinusförmigen Abschnitten der Spulen S2 und S3 andererseits wird in den Spulen S2 und S3 eine mehr oder weniger starke Spannung induziert. Beim Drehen des Rotors ergibt sich in den Spulen S2 und S3 jeweils ein Spannungsverlauf, bei dem ein sinusförmiges Signal die Trägerfrequenz amplitudenmoduliert.

Zwischen den in den Spulen S2 und S3 fließenden Strömen existiert eine Phasenverschiebung um 90°. Mithin läßt sich aus diesen Signalen ein Stellungssignal für den Rotor ermitteln, welches kennzeichnend ist für die relative Lage des Rotors in bezug auf den Stator, und zwar im Rahmen jeweils einer Teilung der Polpaare des Rotors, da bei dieser Ausführungsform die Anzahl der Windungen sowohl der sinusförmigen Leiterbahnen der Leiterplatte 12 als auch der rechteckförmigen Leiterbahn der Spule R2 der Anzahl der Polpaare entspricht.

Die von den Spulen S2 und S3 gelieferten Signale werden in der Auswerte-Elektronik 16 (**Fig. 1** und **2**) zu Stellungssignalen verarbeitet, wie es an sich bekannt ist. Es sei angemerkt, daß in **Fig. 2** die Verbindungsleitungen nicht dargestellt sind. Die Leiterbahnen auf der Leiterplatte 12 sind mit der Auswerte-Elektronik 16 elektrisch verbunden, wie es schematisch in **Fig. 1** gezeigt ist.

Man kann auch eine geringere Anzahl von Wellenlängen für die Spulen R2, S2 und S3 vorsehen, wobei die Anzahl dann einem ganzzahligen Bruchteil der Anzahl der Polpaare entspricht. Bei diesem Ausführungsbeispiel, also bei 42 Magneten am Rotor, das sind 21 Polpaare, können z.B. sieben "Wellenlängen" der Spulen vorhanden sein.

## Patentansprüche

1. Elektromotor mit induktiv arbeitendem Stellungsdetektor zum Ermitteln der relativen Lage des Rotors (10) des Elektromotors (2) bezüglich des Stators (6), umfassend folgende Merkmale:
- an dem Stator (6) ist eine Energie-Übertragungseinrichtung (S1) befestigt;
- an dem Rotor (10) sind eine Energie-Empfangseinrichtung (R1) und eine Sendeeinrichtung (R2), die stellungsabhängige Signale liefert, befestigt,
- an dem Stator (6) ist eine Signal-Empfangseinrichtung (S2; S3) befestigt, wobei die rotorseitige Sende- und die statorseitige Signal-Empfangseinrichtung (R2; S2, S3) zur Erzeugung stellungsabhängiger Signale aus Spulenwindungen bestehen, die sich in Ebenen senkrecht zur Drehachse des Rotors (10) erstrecken, und
- eine Auswerteeinheit (16), die an die Signal-Empfangseinrichtung (S2, S3) angeschlossen ist,
dadurch gekennzeichnet,
daß die Auswerteeinheit (16) dazu ausgebildet ist, die von der Signal-Empfangseinrichtung (S2, S3) des Stators (6) gelieferten, gegeneinander phasenverschobenen Signale auszuwerten, und
daß die Anzahl der Wellenlängen der einen in Umfangsrichtung sinusförmigen oder rechteckförmigen Verlauf aufweisenden rotorseitigen Sendespulenwindungen (R2) und der einen sinusförmigen Verlauf aufweisenden statorseitigen Empfangsspulenwindungen (S2, S3) am Umfang jeweils entweder gleich der Polpaarzahl der Erregereinrichtung des Rotors (10) ist, oder einem ganzzahligen Bruchteil der Polpaarzahl der Erregereinrichtung des Rotors (10) entspricht.

2. Elektromotor nach Anspruch 1,
dadurch gekennzeichnet,
daß die rotorseitigen Sendespulenwindungen (R2) in Umfangsrichtung einen etwa rechteckförmigen Verlauf und die statorseitigen Empfangsspulenwindungen (S2, S3) in Umfangsrichtung sinusförmigen Verlauf aufweisen.

3. Elektromotor nach Anspruch 1 oder 2,
dadurch gekennzeichnet,
daß sämtliche stator- und sämtliche rotorseitigen Sende- und Empfangseinrichtungen jeweils auf einer gemeinsamen Scheibe untergebracht sind.

4. Elektromotor nach Anspruch 3,
dadurch gekennzeichnet,
daß die Sende- und Empfangseinrichtungen durch Leiterbahnen auf den als Leiterplatten (12, 14) ausgeführten Scheiben realisiert sind.

5. Elektromotor nach Anspruch 4,
dadurch gekennzeichnet,
daß die beiden phasenverschobenen Signale der statorseitigen Empfangseinrichtung (S2, S3) durch zwei gegeneinander phasenverschobene Spulenleiterbahnen auf der Vorder- und Rückseite der Leiterplatte (12) erzeugt werden.

6. Elektromotor nach Anspruch 4,
dadurch gekennzeichnet,
daß die beiden phasenverschobenen Signale der statorseitigen Signal-Empfangseinrichtung (S2, S3) durch zwei gegeneinander phasenverschobene Spulenleiterbahnen, deren jeweils erste Wellenlängenhälften auf der Vorder- bzw. Rückseite und deren jeweils zweite Wellenlängenhälften auf der Rück- bzw. Vorderseite der Leiterplatte (12) liegen, erzeugt werden.

7. Elektromotor nach einem der Ansprüche 1 bis 6,
dadurch gekennzeichnet,
daß die stator- und rotorseitigen Sende- und Empfangseinrichtungen einen Abstand in Richtung der relativen Drehachse von maximal 30 mm aufweisen.

8. Elektromotor nach einem der Ansprüche 1 bis 7,
dadurch gekennzeichnet,
daß er mit permanentmagnetisch erregtem Rotor ausgebildet ist.

9. Elektromotor nach einem der Ansprüche 1 bis 9,
dadurch gekennzeichnet,
daß die statorseitige Empfangseinrichtung (S2-S4) Empfangsspulenwindungen (S4) zur stellungsunabhängigen Feststellung einer von der Frequenz des Energieübertragungssignals abgeleiteten Referenzgröße aufweist.

10. Verfahren zum Positionieren der Rotorlage und/oder zum Auswerten der Drehzahl eines Elektromotors nach einem der Ansprüche 1 bis 9,
dadurch gekennzeichnet,
daß zum Positionieren bzw. Auswerten das Ausgangssignal der Auswerteeinheit verarbeitet wird.

## Claims

1. An electric motor comprising an inductively operating position detector for detecting the relative position of the rotor (10) of the electric motor (2) with respect to the stator (6), comprising the following features:
- the stator (6) has an energy transmission means (S1) attached thereto;
- attached to the rotor (10) are an energy receiving means (R1) and an energy transmitting means (R2) which delivers position-dependent signals,
- the stator (6) has a signal receiving means (S2, S3) attached thereto, with the transmitting means on the rotor side and the signal receiving means (R2; S2, S3) on the stator side, for generating position-dependent signals, consisting of coil windings extending in planes perpendicular to the axis of rotation of the rotor (10), and
- an evaluation unit (16) connected to the signal receiving means (S2, S3),
characterized in
that the evaluation unit (16) is designed to evaluate the mutually phase-shifted signals that are delivered from the signal receiving means (S2, S3) of the stator (6), and
that the number of the wavelengths of the transmitting coil windings (R2) on the rotor side, having a sinusoidal or a rectangular pattern, and of the receiving coil windings (S2, S3) on the stator side, having a sinusoidal pattern, at the circumference each is either equal to the pole pair number of the excitation means of the rotor (10) or corresponds to an integral fraction of the pole pair number of the excitation means of the rotor (10).

2. The electric motor of claim 1,
characterized in that the transmitting coil windings (R2) on the rotor side have an approximately rectangular pattern in circumferential direction and the receiving coil windings (S2, S3) on the stator side have a sinusoidal pattern in circumferential direction.

3. The electric motor of claim 1 or 2,
characterized in that all transmitting and receiving means on the stator side and all transmitting and receiving means on the rotor side are accommodated on one common disc each.

4. The electric motor of claim 3,
characterized in that the transmitting and receiving means are realized in the form of conductive tracks on the discs designed as circuit boards (12, 14).

5. The electric motor of claim 4,
characterized in that the two phase-shifted signals of the receiving means (S2, S3) on the stator side are generated by two mutually phase-shifted coil conductive tracks on the front and rear sides of the circuit board (12).

6. The electric motor of claim 4,
characterized in that the two phase-shifted signals of the signal receiving means (S2, S3) on the stator side are generated by two mutually phase-shifted coil conductive tracks, the respective first wavelength halves thereof being located on the front and rear sides, respectively, and the respective second wavelength halves thereof being located on the rear and front sides, respectively, of the circuit board (12).

7. The electric motor of any of claims 1 to 6,
characterized in that the transmitting and receiving means on the stator side and on the rotor side are spaced in the direction of the relative axis of rotation by a distance of 30 mm at the most.

8. The electric motor of any of claims 1 to 7,
characterized in that it is formed with a rotor excited by permanent magnets.

9. The electric motor of any of claims 1 to 9,
characterized in that the receiving means (S2 to S4) on the stator side comprises receiving coil windings (S4) for position-independent determination of a reference quantity derived from the frequency of the energy transmission signal.

10. A method of positioning the rotor position and/or for evaluating the speed of an electric motor according to any one of claims 1 to 9,
characterized in that the output signal of the evaluation unit is processed for positioning and evaluating, respectively.

## Revendications

1. Moteur électrique avec un détecteur de position, travaillant de façon inductive, pour déterminer la position relative du rotor (10) du moteur électrique (2) par rapport au stator (6), présentant les caractéristiques ci-après :
- un dispositif de transmission d'énergie (S1) est fixé au stator (6),
- un dispositif de réception d'énergie (R1) et un dispositif émetteur (R2), qui fournit des signaux dépendants de la position, sont fixés au rotor (10),
- un dispositif de réception de signal (S2, S3) est fixé au stator (6), le dispositif émetteur situé côté rotor et le dispositif de réception de signal situé côté stator (R2; S2, S3) destinés à générer les signaux dépendants de la position étant constitués d'enroulements de bobines qui s'étendent dans des plans perpendiculaires par rapport à l'axe de rotation du rotor (10), et
- une unité d'évaluation (16) qui est raccordée au dispositif de réception de signal (S2, S3),
caractérisé en ce que,
l'unité d'évaluation (16) est conçue pour évaluer les signaux déphasés les uns par rapport aux autres, fournis par le dispositif de réception de signal (S2, S3) du stator (6), et
en ce que le nombre des longueurs d'ondes des enroulements de bobines émettrices (R2), situés côté rotor, présentant dans la direction circonférentielle une forme sinusoïdale ou une forme rectangulaire, et des enroulements de bobines réceptrices (S2, S3) situés côté stator présentant une allure à forme sinusoïdale, sur la périphérie, est chaque fois soit égal au nombre de paires de pôle du dispositif excitateur du rotor (10), soit correspond à une fraction entière du nombre de paires de pôles du dispositif excitateur du rotor (10).

2. Moteur électrique selon la revendication 1,
caractérisé en ce que
les enroulements de bobines émettrices (R2) situées côté rotor présentent dans la direction périphérique une allure à peu près à forme rectangulaire et les enroulements de bobines réceptrices (S2, S3) situés côté stator présentent une allure en direction périphérique à forme sinusoïdale.

3. Moteur électrique selon la revendication 1 ou 2,
caractérisé en ce que :
l'ensemble des dispositifs émetteurs et récepteurs situés côté stator et l'ensemble des dispositifs émetteurs et récepteurs situés côté rotor sont chaque fois logés sur un disque commun.

4. Moteur électrique selon la revendication 3,
caractérisé en ce que :
les dispositifs émetteurs et récepteurs sont réalisés par des pistes conductrices montées sur les disques réalisés sous la forme de plaquettes à circuits imprimés (12, 14).

5. Moteur électrique selon la revendication 4,
caractérisé en ce que :
les deux signaux déphasés du dispositif récepteur (S2, S3) situé côté stator sont générés par deux pistes conductrices de bobine, déphasées l'une par rapport à l'autre, sur la face avant et la face arrière de la plaquette à circuit imprimé (12).

6. Moteur électrique selon la revendication 4,
caractérisé en ce que,
les deux signaux déphasés du dispositif récepteur de signal (S2, S3) situé côté stator sont générés par deux pistes conductrices de bobine, déphasées l'une par rapport à l'autre, dont chaque fois les premières demi-longueurs d'ondes sont situées sur la face avant, respectivement la face arrière, et dont chaque fois les deuxièmes demi-longueurs d'ondes sont situées sur la face arrière, respectivement la face avant de la plaquette à circuit imprimé (12).

7. Moteur électrique selon l'une des revendications 1 à 6,
caractérisé en ce que :
les dispositifs émetteurs et récepteurs situés côté stator et côté rotor présentent un espacement maximal de 30 mm dans la direction de l'axe de rotation relatif.

8. Moteur électrique selon l'une des revendications 1 à 7,
caractérisé en ce qu'il est réalisé avec un rotor excité par aimant permanent.

9. Moteur électrique selon l'une des revendications 1 à 9,
caractérisé en ce que :
le dispositif récepteur (S2, S4) situé côté stator présente des enroulements de bobines réceptrices (S4) destinés à constater de façon indépendante de la position une grandeur de référence dérivée de la fréquence du signal de transmission d'énergie.

10. Procédé de positionnement de la position rotor et/ou pour l'évaluation de la vitesse de rotation d'un moteur électrique selon l'une des revendications 1 à 9,
caractérisé en ce que :
le signal de sortie de l'unité d'évaluation est travaillé pour positionner ou évaluer.
